# FASCICULE DE BREVET EUROPEEN

(11) **EP 1 449 709 B1**
(45) Date de publication et mention de la délivrance du brevet: **17.06.2009**
(21) Numéro de dépôt: 04300028.0
(22) Date de dépôt: 20.01.2004
(51) Int. Cl.: B60N 2/01, B60R 7/04

(54) **Agencement pour un véhicule automobile comportant une console formant table et un siège central coulissant**
Anordnung für Kraftfahrzeug mit einer einen Tisch bildenden Konsole und einem zentralen Schiebesitz
Arrangement for motor vehicle with a table forming console and a central sliding seat

(30) Priorité: 23.01.2003 FR 0300699
(43) Date de publication de la demande: 25.08.2004
(73) Titulaire: Adam Opel GmbH, 65423 Rüsselsheim (DE)
(72) Inventeur: Michelin, Didier, 78950 Gambais (FR); Sinibardy, Frédéric, 92210 Saint Cloud (FR)
(74) Mandataire: Kohn, Philippe

(56) Documents cités:
- EP-A- 0 949 116
- EP-A- 1 040 960
- EP-A- 1 110 810
- DE-A- 10 044 414
- DE-A- 19 909 728
- FR-A- 2 791 622
- US-A- 3 583 760
- US-A- 5 611 589
- US-A- 5 947 541
- US-A- 6 135 529
- PATENT ABSTRACTS OF JAPAN vol. 0131, no. 78 (M-819), 26 avril 1989 (1989-04-26) & JP 1 009041 A (MASAO KUBOTA; others: 01), 12 janvier 1989 (1989-01-12)
- PATENT ABSTRACTS OF JAPAN vol. 1997, no. 08, 29 août 1997 (1997-08-29) & JP 9 109778 A (TOYOTA AUTO BODY CO LTD), 28 avril 1997 (1997-04-28)

## Description

L'invention concerne un agencement pour un habitacle de véhicule automobile.

L'invention concerne plus particulièrement un agencement pour un habitacle de véhicule automobile, du type dans lequel un plancher du véhicule porte au moins une paire de sièges latéraux avant, une paire de sièges latéraux intermédiaires, et une paire de sièges latéraux arrière, les sièges de chaque paire étant agencés symétriquement de part et d'autre d'un axe longitudinal médian du véhicule, du type qui comporte au moins une console qui est montée coulissante sur le plancher le long de l'axe longitudinal médian du véhicule et du type dans lequel la console délimite au moins un compartiment pour le rangement d'une table qui est mobile entre une position escamotée dans laquelle au moins un panneau de la table, escamoté dans le compartiment, s'étend globalement dans un plan longitudinal vertical et une position déployée dans laquelle ledit panneau s'étend globalement dans un plan horizontal hors du compartiment.

On connaît de nombreux exemples d'agencements de ce type.

Le document JP-9109778 qui est considéré comme état de l'art antérieur le plus proche décrit et représente un agencement comportant une paire de sièges avant pivotants, une paire de sièges intermédiaires et une paire de sièges arrière et dans lequel une console du type décrit précédemment est mobile le long de l'axe médian du véhicule entre les sièges de chaque paire.

Cette conception présente l'inconvénient de limiter le nombre de places pouvant être desservies par la table de la console.

En effet, dans le meilleurs des cas, la table portée par la console ne peut desservir que la paire de places avant agencée en vis à de la paire de places intermédiaires.

Par ailleurs, cette conception interdit l'utilisation de l'agencement pour desservir quatre places lorsque le véhicule roule, puisque dans ce dernier cas, au moins le siège du conducteur doit être tourné face à la route.

L'invention propose une nouvelle conception d'un agencement du type précédemment décrit, qui permet non seulement de disposer d'une table pouvant desservir jusqu'à cinq places en vis à vis, mais encore de disposer de ces cinq places lorsque le véhicule roule.

Dans ce but, l'invention propose un agencement du type décrit précédemment, caractérisé en ce que la console est susceptible d'occuper au moins une position dans laquelle la table déployée est agencée longitudinalement entre la paire de sièges latéraux avant et la paire de sièges latéraux intermédiaires et au moins une position dans laquelle la table déployée est agencée longitudinalement entre la paire de sièges latéraux intermédiaires et la paire de sièges latéraux arrière, et en ce qu'il comporte au moins un siège central mobile sur le plancher suivant l'axe longitudinal médian du véhicule entre au moins une position dans laquelle le siège central est agencé entre les sièges latéraux intermédiaires et au moins une position dans laquelle le siège central est agencé entre les sièges latéraux arrière, pour déterminer au moins une configuration de l'habitacle dans laquelle la table déployée dessert les sièges latéraux intermédiaires et le siège central alignés transversalement et au moins une configuration de l'habitacle dans laquelle la table déployée dessert les sièges latéraux arrière et le siège central alignés transversalement.

Selon d'autres caractéristiques de l'invention :
- le siège central est monté coulissant le long de l'axe médian du véhicule,
- les sièges latéraux avant sont susceptibles d'être tournés vers l'arrière du véhicule pour déterminer au moins une configuration de l'habitacle dans laquelle la table déployée dessert les sièges latéraux avant en vis à vis des sièges latéraux intermédiaires et au moins une configuration de l'habitacle dans laquelle la table déployée dessert les sièges latéraux avant en vis à vis des sièges latéraux intermédiaires et du siège central,
- les sièges latéraux avant sont montés pivotants chacun sur un support réglable longitudinalement,
- les sièges latéraux intermédiaires sont susceptibles d'être tournés vers l'arrière du véhicule pour déterminer au moins une configuration de l'habitacle dans laquelle la table déployée dessert les sièges latéraux intermédiaires en vis à vis des sièges latéraux arrière et du siège central,
- les sièges latéraux intermédiaire et arrière sont chacun montés coulissants sur des rails,
- chaque siège latéral intermédiaire est susceptible d'être extrait de ses rails, retourné, puis inséré à nouveau dans lesdits rails pour permettre son orientation vers l'arrière,
- chaque siège latéral intermédiaire est monté sur ses rails par l'intermédiaire d'un support sur lequel il est monté pivotant pour permettre son orientation vers l'arrière,
- chaque siège porte comporte une ceinture de sécurité solidaire dudit siège,
- la console comporte un boîtier de part et d'autre duquel sont agencés deux compartiments latéraux verticaux opposés transversalement qui sont destinés chacun à recevoir, en position escamotée de la table, un panneau formant la moitié de la table et le boîtier comporte des moyens de maintien qui sont destinés, en position déployée de la table à maintenir chaque panneau en position horizontale,
- chaque panneau est rectangulaire et est monté coulissant verticalement dans le compartiment au moins par l'intermédiaire de pions inférieurs agencés aux extrémités inférieures de chaque panneau, qui sont reçus dans deux glissières verticales agencées aux extrémités longitudinales verticales des compartiments,
- les moyens de maintien comportent deux glissières qui s'étendent horizontalement aux extrémités longitudinales du boîtier à partir des extrémités supérieures des glissières verticales horizontales vers l'intérieur du boîtier et qui sont destinées à recevoir les pions de guidage inférieurs de chaque panneau pour permettre, une fois qu'un panneau a été extrait verticalement de son compartiment et rabattu horizontalement, de maintenir ledit panneau en porte à faux sur le boîtier,
- chaque panneau est monobloc et chaque compartiment est de dimensions sensiblement correspondantes à celles du panneau,
- chaque panneau est réalisé en deux parties égales articulées l'une par rapport à l'autre sensiblement au milieu du panneau par une charnière d'axe longitudinal, chaque partie comporte des moyens de verrouillage par rapport à l'autre partie, les dimensions longitudinales et verticales du compartiment correspondent sensiblement à celles d'une partie, et la dimension transversale du compartiment est sensiblement double de celle d'une des parties.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté d'un véhicule automobile comportant un agencement selon l'invention ;
- la figure 2 est une vue en perspective représentant une console pour un agencement selon l'invention ;
- la figure 3 est une demi-vue en coupe transversale représentant une console pour un agencement selon l'invention ;
- la figure 4 est une vue de dessus représentant un agencement selon l'invention représenté dans une première configuration ;
- la figure 5 est une vue de dessus représentant un agencement selon l'invention représenté dans une deuxième configuration ;
- la figure 6 est une vue de dessus représentant un agencement selon l'invention représenté dans une troisième configuration ;
- la figure 7 est une vue de dessus représentant un agencement selon l'invention représenté dans une quatrième configuration ;
- la figure 8 est une vue de dessus représentant un agencement selon l'invention représenté dans une cinquième configuration ;
- la figure 9 est une vue de dessus représentant un agencement selon l'invention représenté dans une sixième configuration ;
- la figure 10 est une vue de dessus représentant un agencement selon l'invention représenté dans une septième configuration.

Dans la description qui va suivre, des chiffres de référence identiques désignent des pièces identiques ou ayant des fonctions similaires.

Par convention, les termes "avant", "arrière", "droit" ou "gauche" désignent respectivement des éléments ou des positions orientés respectivement vers la gauche, la droite, le haut ou le bas des figures.

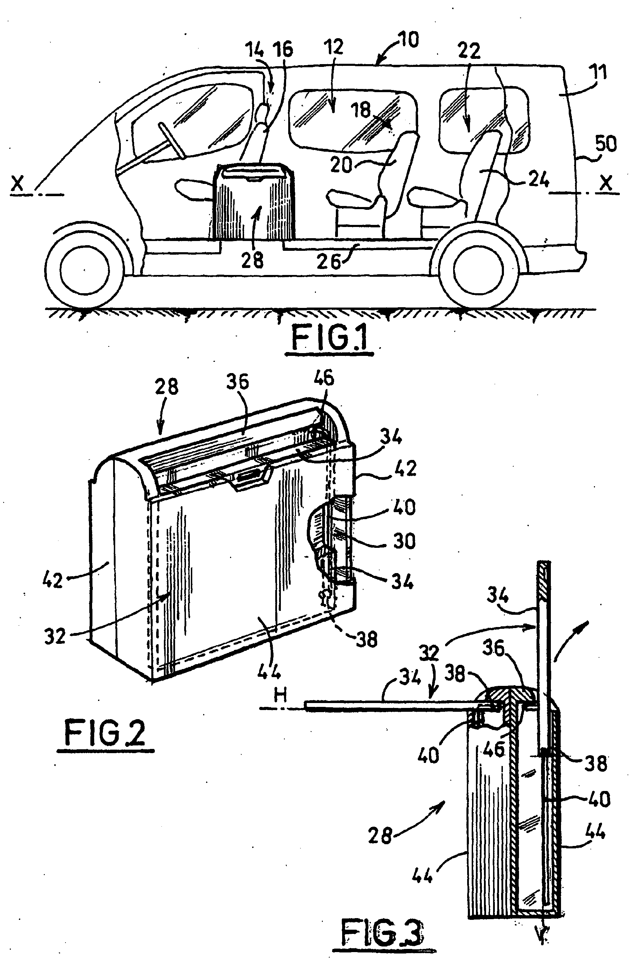

On a représenté à la figure 1 un véhicule automobile 10 dont un habitacle 11 est destiné à recevoir un agencement 12 selon l'invention.

Sur la figure 1, le véhicule 10 est un fourgon de type vitré, mais cette configuration n'est pas limitative de l'invention.

L'agencement 12 peut en effet trouver à s'appliquer à tout type de véhicule 10 suffisamment long pour comporter au moins trois paires de sièges, par exemple un véhicule de type "monospace".

De manière connue, l'agencement 12 comporte un plancher 26 qui porte une paire 14 de sièges 16 latéraux avant, une paire 18 de sièges 20 latéraux intermédiaires, et une paire 22 de sièges 24 latéraux arrière.

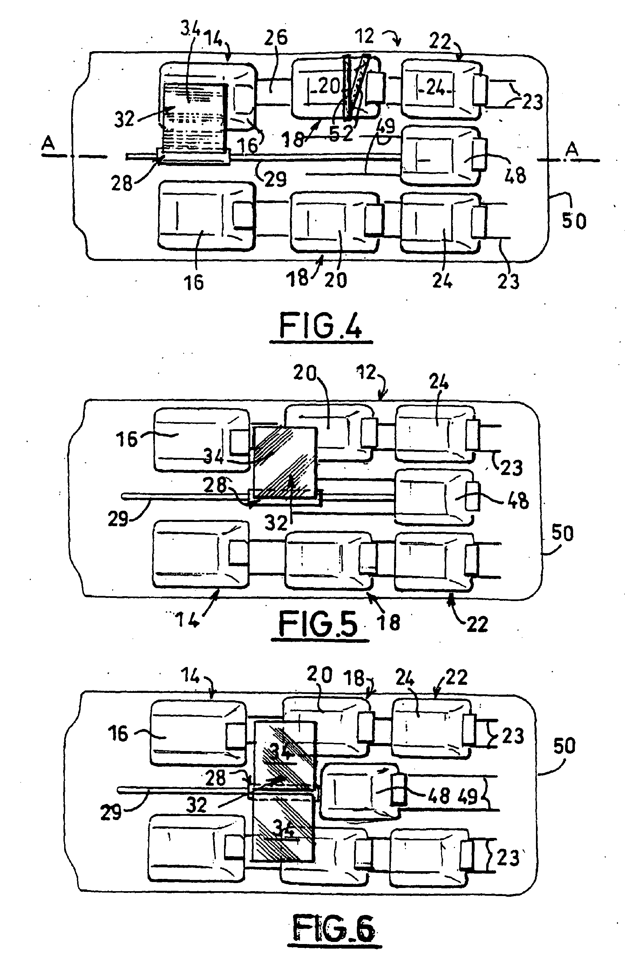

Comme l'illustrent les figures 4 et suivantes, les sièges 16, 20, 24 de chaque paire 14, 18, 22 sont agencés symétriquement de part et d'autre d'un axe "A" longitudinal médian du véhicule 10.

De manière connue, l'agencement 12 comporte au moins une console 28 qui est montée coulissante sur le plancher 26 le long de l'axe "A" longitudinal médian du véhicule.

Comme l'illustrent les figures 2 et 3, la console 28 délimite au moins un compartiment 30 pour le rangement d'une table 32 qui est mobile entre une position escamotée, représentée en traits pointillés sur la figure 3, dans laquelle au moins un panneau 34 de la table 32, escamoté dans le compartiment 30, s'étend globalement dans un plan "V" longitudinal vertical et une position déployée, représentée en traits forts sur la figure 3, dans laquelle ledit panneau 34 s'étend globalement dans un plan horizontal "H" hors du compartiment 30.

Plus particulièrement, la console 28 comporte, de manière connue, un boîtier 36 de part et d'autre duquel sont agencés deux compartiments 30 latéraux verticaux opposés transversalement qui sont destinés chacun à recevoir, en position escamotée de la table 32, un panneau 34 formant la moitié de la table 32, comme représenté à la figure 2. Le boîtier 36 comporte des moyens de maintien qui sont destinés, en position déployée de la table 32 à maintenir chaque panneau en position horizontale. La table 32 est donc globalement formée de deux panneaux 34 formant une demi-table, chaque panneau 34 pouvant être sélectivement déployé ou non.

Selon cette conception, chaque panneau 34 est rectangulaire et il est monté coulissant verticalement dans le compartiment 30, de forme parallélépipédique, au moins par l'intermédiaire de pions inférieurs 38 agencés aux extrémités inférieures de chaque panneau 34, qui sont reçus dans deux glissières verticales 40 agencées aux extrémités 42 longitudinales verticales des compartiments. Dans le mode de réalisation préféré de l'invention chaque panneau 34 est guidé par les pions inférieurs 38 qui coulissent dans les glissières 40 et il est guidé dans sa partie supérieure par les parois verticales 44 du compartiment.

Par ailleurs, les moyens de maintien en position horizontale comportent deux glissières 46 qui s'étendent horizontalement aux extrémités longitudinales 42 du boîtier 36 à partir des extrémités supérieures des glissières verticales 40 horizontales vers l'intérieur du boîtier 36 et qui sont destinées à recevoir les pions 38 de guidage inférieurs de chaque panneau 34 pour permettre, une fois qu'un panneau 34 a été extrait verticalement de son compartiment 30 et rabattu horizontalement, de maintenir ledit panneau 34 en porte à faux sur le boîtier 36, comme représenté en traits forts sur la figure 3.

Dans le mode de réalisation qui a été représenté sur les figures 2 et 3, chaque panneau 34 est monobloc et chaque compartiment 30 est de dimensions sensiblement correspondantes à celles du panneau 34.

En variante (non représentée), chaque panneau 34 peut être réalisé en deux parties égales articulées l'une par rapport à l'autre sensiblement au milieu du panneau par une charnière d'axe longitudinal, et chacune de ces parties comporte alors des moyens de verrouillage par rapport à l'autre partie de manière à former un panneau 34 qui occupe un encombrement deux fois moindre de l'encombrement précédemment décrit lorsque la table 32 est escamotée dans le compartiment 30 et qui, en position déployée, est d'une taille sensiblement analogue à celle du panneau 34 monobloc qui a été décrit en référence aux figures 2 et 3.

Dans cette configuration, les dimensions longitudinales et verticales du compartiment 30 correspondent alors sensiblement à celles d'une partie, et la dimension transversale du compartiment 30 est sensiblement double de celle d'une des parties.

Conformément à l'invention, comme l'illustrent les figures 4 et suivantes, la console 28 est susceptible d'occuper au moins une position dans laquelle la table 32 déployée est agencée longitudinalement entre la paire 14 de sièges 16 latéraux avant et la paire 18 de sièges latéraux intermédiaires et au moins une position dans laquelle la table déployée 32 est agencée longitudinalement entre la paire 18 de sièges 20 latéraux intermédiaires et la paire 22 de sièges latéraux 24 arrière.

A cet effet, la console 28 est par exemple montée coulissante sur des rails longitudinaux 29.

L'agencement 10 comporte par ailleurs au moins un siège 48 central mobile sur le plancher 26 suivant l'axe "A" longitudinal médian du véhicule entre au moins une position dans laquelle le siège 48 central est agencé entre les sièges 20 latéraux intermédiaires et au moins une position dans laquelle le siège 48 central est agencé entre les sièges 24 latéraux arrière.

Dans le mode de réalisation préféré de l'invention, le siège 48 central est monté coulissant sur au moins un rail 49 le long de l'axe longitudinal médian "A" du véhicule. Cette configuration ,'est toutefois pas limitative de l'invention, et le siège 48 central pourrait être mobile suivant un ensemble de positions longitudinales déterminées, obtenues par exemple par déboîtement et emboîtement du siège 48 sur des moyens de fixation répartis à intervalles réguliers le long de l'axe médian "A" du véhicule.

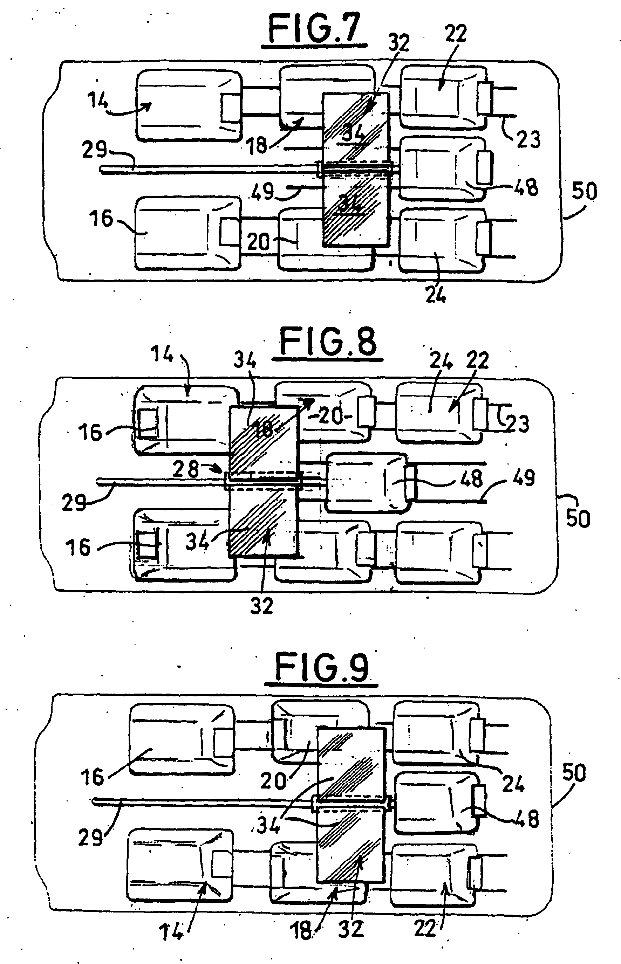

De cette manière, l'agencement 12 détermine au moins une configuration de l'habitacle 11, dans laquelle la table 32 déployée dessert les sièges latéraux 20 intermédiaires et le siège 48 central alignés transversalement, comme représenté aux figures 6 et 8, et au moins une configuration de l'habitacle 11, dans laquelle la table déployée 32 dessert les sièges 24 latéraux arrière et le siège 48 central alignés transversalement, comme représenté aux figures 7 et 9.

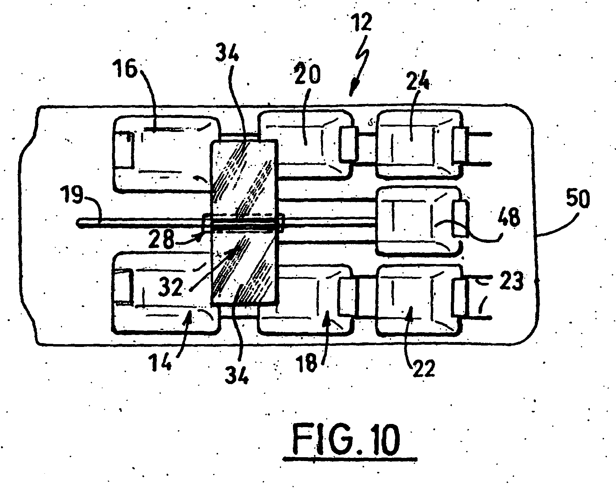

Avantageusement, les sièges 16 latéraux avant sont susceptibles d'être tournés vers l'arrière 50 du véhicule 10 pour déterminer au moins une configuration de l'habitacle 11 dans laquelle la table 32 déployée dessert les sièges 16 latéraux avant en vis à vis des sièges 20 latéraux intermédiaires, comme représenté à la figure 10, et au moins une configuration de l'habitacle 11 dans laquelle la table 32 déployée dessert les sièges 16 latéraux avant en vis à vis des sièges latéraux intermédiaires 20 et du siège central 48, comme représenté à la figure 8.

Dans le mode de réalisation préféré de l'invention, les sièges 20 latéraux avant sont montés pivotants chacun sur un support (non représenté) qui est aussi réglable longitudinalement, de manière à proposer une grande variété de positions et à proposer une manipulation aisée.

Cette configuration n'est toutefois pas limitative de l'invention, et les sièges 20 latéraux avant pourraient être simplement fixés sur le plancher 26 par des fixations dont ils pourraient être extraits, puis retournés et à nouveau fixés.

Avantageusement, les sièges 20 latéraux intermédiaires sont eux aussi susceptibles d'être tournés vers l'arrière 50 du véhicule pour déterminer au moins une configuration de l'habitacle 11 dans laquelle la table 32 déployée dessert les sièges 20 latéraux intermédiaires en vis à vis des sièges 24 latéraux arrière et du siège 48 central, comme représenté à la figure 9.

Dans le mode de réalisation préféré de l'invention les sièges latéraux intermédiaires 20 et arrière 24 sont chacun montés coulissants sur des rails, notamment des rails 23 communs, de manière à proposer une grande variété de positions.

Selon cette conception, plusieurs modes de retournement des sièges 20 latéraux intermédiaires peuvent être envisagés.

Chaque siège 20 latéral intermédiaire peut par exemple être extrait de ses rails 23, retourné, puis inséré à nouveau dans lesdits rails 23 pour permettre son orientation vers l'arrière.

En variante, chaque siège 20 latéral intermédiaire peut être monté sur ses rails 23 par l'intermédiaire d'un support (non représenté) sur lequel le siège 20 est monté pivotant pour permettre son orientation vers l'arrière 50 du véhicule.

Selon la conception générale qui a été décrite précédemment l'agencement est susceptible d'occuper différentes configurations qui ont été décrites à titre d'exemple en référence aux figures 4 à 10.

Dans une première configuration qui a été représentée à la figure 4, la console 28 est agencée axialement au niveau des sièges latéraux avant 16 et un panneau 34 de la table 32 est déployé pour desservir la place du passager occupant le siège latéral avant 16 situé à droite du véhicule. Le siège central 48 occupe une position reculée entre les sièges latéraux arrière 24, mais il pourrait aussi occuper une position intermédiaire entre les sièges 20 latéraux intermédiaires.

Dans une deuxième configuration qui a été représentée à la figure 5, la console 28 est reculée axialement entre les sièges latéraux avant 16 et arrière 20, et un panneau 34 de la table 32 est déployé pour desservir la place du passager occupant le siège 20 latéral intermédiaire situé à droite du véhicule. Il sera compris que les deux panneaux 34 pourraient être déployés pour que la table 32 desserve les deux sièges 20 latéraux intermédiaires.

Dans une troisième configuration qui a été représentée à la figure 6, la console 28 est reculée axialement entre les sièges latéraux avant 16 et arrière 20, le siège central 48 est avancé entre les sièges latéraux intermédiaires 20, et les deux panneaux 34 de la table 32 sont déployés pour que la table 32 desserve les deux sièges 20 latéraux intermédiaires et le siège central 48.

Dans une quatrième configuration qui a été représentée à la figure 7, la console 28 est reculée axialement entre les sièges latéraux intermédiaires 20 et arrière 24, le siège central 48 est reculé entre les sièges latéraux arrière 24, et les deux panneaux 34 de la table 32 sont déployés pour que la table 32 desserve les deux sièges 24 latéraux arrière et le siège central 48. Dans ce cas, soit les sièges latéraux intermédiaires 20 occupent une configuration (non représentée) dans laquelle ils sont avancés devant la table 32 qui est reculée au maximum, le siège central 38 pouvant être reculé par rapport aux sièges 24 latéraux arrière, soit, comme l'illustre la figure 7, le dossier de chaque siège intermédiaire 20 est replié contre son assise afin de permettre le déploiement des panneaux 34 de la table 32.

Dans une cinquième configuration qui a été représentée à la figure 8, les sièges 16 latéraux avant ont été retournés vers l'arrière 50 du véhicule, la console 28 est reculée axialement entre les sièges latéraux avant 16 et intermédiaires 20, le siège central 48 est avancé entre les sièges latéraux intermédiaires 20, et les deux panneaux 34 de la table 32 sont déployés pour que la table 32 desserve les deux sièges latéraux avant 16, les deux sièges 20 latéraux intermédiaires et le siège central 48.

Dans une sixième configuration qui a été représentée à la figure 9, les sièges 20 latéraux intermédiaires ont été retournés vers l'arrière 50 du véhicule, la console 28 est reculée axialement entre les sièges latéraux intermédiaires 20 et arrière 24, le siège central 48 étant agencé entre les sièges latéraux arrière 24, et les deux panneaux 34 de la table 32 sont déployés pour que la table 32 desserve les deux sièges 20 latéraux intermédiaires, les deux sièges 24 latéraux arrière et le siège central 48.

Dans une septième configuration qui a été représentée à la figure 8, les sièges 16 latéraux avant ont été retournés vers l'arrière 50, du véhicule, la console 28 est reculée axialement entre les sièges latéraux avant 16 et intermédiaires 20, le siège central 48 est reculé entre les sièges latéraux arrière 24, et les deux panneaux 34 de la table 32 sont déployés pour que la table 32 desserve les deux sièges latéraux avant 16 et les deux sièges 20 latéraux intermédiaires.

On remarquera enfin que, afin de proposer un agencement 12 garantissant des conditions de sécurité maximales aux passagers du véhicule 10, et afin de permettre une manipulation aisée des sièges 16, 20, 24, 48, chaque siège 16, 20, 24, 48 comporte une ceinture 52 de sécurité qui est solidaire dudit siège 16, 20, 24, 48, comme l'illustre la figure 4.

Comme on peut le voir l'invention propose un nombre élevé de combinaisons d'agencements de l'habitacle 11.

Il sera compris que les exemples qui ont été décrits précédemment ne sont nullement limitatifs de l'invention, et qu'un grand nombre de combinaisons et de variantes peuvent être envisagées.

Ainsi, il serait possible d'envisager une configuration dans laquelle le véhicule comporterait un siège central supplémentaire central amovible qui pourrait être par exemple agencé entre les sièges 16 latéraux avant ou intermédiaires dans des configurations du type de celles qui ont été décrites respectivement en référence aux figures 8 ou 9. Dans ce cas, la table 32 permettrait de desservir jusqu'à six places du véhicule.

Le véhicule pourrait aussi par exemple être un véhicule de grande taille tel qu'un bus et il pourrait comporter un grand nombre de paires de sièges et plusieurs tables 32.

## Revendications

1. Agencement (12) pour un habitacle (11) de véhicule automobile (10), du type dans lequel un plancher (26) du véhicule porte au moins une paire (14) de sièges (16) latéraux avant, une paire (18) de sièges (20) latéraux intermédiaires, et une paire (22) de sièges (24) latéraux arrière, les sièges (16, 20, 24) de chaque paire (14, 18, 22) étant agencés symétriquement de part et d'autre d'un axe (A) longitudinal médian du véhicule (10), du type qui comporte au moins une console (28) qui est montée coulissante sur le plancher (26) le long de l'axe (A) longitudinal médian du véhicule et du type dans lequel la console (28) délimite au moins un compartiment (30) pour le rangement d'une table (32) qui est mobile entre une position escamotée dans laquelle au moins un panneau (34) de la table (32), escamoté dans le compartiment (30), s'étend globalement dans un plan longitudinal vertical (V) et une position déployée dans laquelle ledit panneau (34) s'étend globalement dans un plan horizontal (H) hors du compartiment (30),
**caractérisé en ce que** la console (28) est susceptible d'occuper au moins une position dans laquelle la table (32) déployée est agencée longitudinalement entre la paire (14) de sièges (16) latéraux avant et la paire (18) de sièges (20) latéraux intermédiaires et au moins une position dans laquelle la table (32) déployée est agencée longitudinalement entre la paire (18) de sièges (20) latéraux intermédiaires et la paire (22) de sièges (24) latéraux arrière,
et **en ce qu'**il comporte au moins un siège (48) central mobile sur le plancher suivant l'axe (A) longitudinal médian du véhicule entre au moins une position dans laquelle le siège (48) central est agencé entre les sièges (20) latéraux intermédiaires et au moins une position dans laquelle le siège (48) central est agencé entre les sièges (24) latéraux arrière,
pour déterminer au moins une configuration de l'habitacle (11) dans laquelle la table (32) déployée dessert les sièges (20) latéraux intermédiaires et le siège (48) central alignés transversalement et au moins une configuration de l'habitacle (11) dans laquelle la table (32) déployée dessert les sièges (24) latéraux arrière et le siège (48) central alignés transversalement.

2. Agencement (12) selon la revendication précédente, **caractérisé en ce que** le siège (48) central est monté coulissant le long de l'axe (A) médian du véhicule (10).

3. Agencement (12) selon l'une des revendications précédente, **caractérisé en ce que** les sièges (16) latéraux avant sont susceptibles d'être tournés vers l'arrière (50) du véhicule (10) pour déterminer au moins une configuration de l'habitacle (11) dans laquelle la table (32) déployée dessert les sièges (16) latéraux avant en vis à vis des sièges (20) latéraux intermédiaires et au moins une configuration de l'habitacle (11) dans laquelle la table (32) déployée dessert les sièges (16) latéraux avant en vis à vis des sièges (20) latéraux intermédiaires et du siège (48) central.

4. Agencement (12) selon la revendication précédente, **caractérisé en ce que** les sièges (16) latéraux avant sont montés pivotants chacun sur un support réglable longitudinalement.

5. Agencement (12) selon l'une des revendications précédentes, **caractérisé en ce que** les sièges (20) latéraux intermédiaires sont susceptibles d'être tournés vers l'arrière (50) du véhicule (10) pour déterminer au moins une configuration de l'habitacle (11) dans laquelle la table (32) déployée dessert les sièges (20) latéraux intermédiaires en vis à vis des sièges (24) latéraux arrière et du siège (48) central.

6. Agencement (12) selon la revendication précédente, **caractérisé en ce que** les sièges (20, 24) latéraux intermédiaire et arrière sont chacun montés coulissants sur des rails (23).

7. Agencement (12) selon la revendication précédente, **caractérisé en ce que** chaque siège (20) latéral intermédiaire est susceptible d'être extrait de ses rails (23), retourné, puis inséré à nouveau dans lesdits rails (23) pour permettre son orientation vers l'arrière (50).

8. Agencement (12) selon la revendication 6, **caractérisé en ce que** chaque siège (20) latéral intermédiaire est monté sur ses rails (23) par l'intermédiaire d'un support sur lequel il est monté pivotant pour permettre son orientation vers l'arrière (50).

9. Agencement (12) selon les revendications 2 à 8 prises en combinaison, **caractérisé en ce que** chaque siège (16, 20, 24, 48) porte comporte une ceinture (52) de sécurité solidaire dudit siège (16, 20, 24, 48).

10. Agencement (12) selon l'une quelconque des revendications précédentes, **caractérisé en ce que** la console (28) comporte un boîtier (36) de part et d'autre duquel sont agencés deux compartiments (30) latéraux verticaux opposés transversalement qui sont destinés chacun à recevoir, en position escamotée de la table (32), un panneau (34) formant la moitié de la table (32) et **en ce que** le boîtier (36) comporte des moyens de maintien qui sont destinés, en position déployée de la table (32) à maintenir chaque panneau (34) en position horizontale.

11. Agencement (12) selon la revendication précédente, **caractérisé en ce que** chaque panneau (34) est rectangulaire et est monté coulissant verticalement dans le compartiment au moins par l'intermédiaire de pions (38) inférieurs agencés aux extrémités inférieures de chaque panneau (34), qui sont reçus dans deux glissières (40) verticales agencées aux extrémités (42) longitudinales verticales des compartiments (30).

12. Agencement (12) selon la revendication précédente, **caractérisé en ce que** les moyens de maintien comportent deux glissières (46) qui s'étendent horizontalement aux extrémités (42) longitudinales du boîtier (36) à partir des extrémités supérieures des glissières (40) verticales horizontales vers l'intérieur du boîtier (36) et qui sont destinées à recevoir les pions (38) de guidage inférieurs de chaque panneau (34) pour permettre, une fois qu'un panneau (34) a été extrait verticalement de son compartiment (30) et rabattu horizontalement, de maintenir ledit panneau (34) en porte à faux sur le boîtier (36).

13. Agencement (12) selon l'une quelconque des revendications 10 à 12, **caractérisé en ce que** chaque panneau (34) est monobloc et **en ce que** chaque compartiment (30) est de dimensions sensiblement correspondantes à celles du panneau (34).

14. Agencement (12) selon l'une quelconque des revendications 10 à 12, **caractérisé en ce que** chaque panneau (34) est réalisé en deux parties égales articulées l'une par rapport à l'autre sensiblement au milieu du panneau (34) par une charnière d'axe longitudinal, **en ce que** chaque partie comporte des moyens de verrouillage par rapport à l'autre partie, **en ce que** les dimensions longitudinales et verticales du compartiment (30) correspondent sensiblement à celles d'une partie, et **en ce que** la dimension transversale du compartiment (30) est sensiblement double de celle d'une des parties.

## Claims

1. Arrangement (12) for a passenger compartment (11) of a motor vehicle (10), of the type in which a floor (26) of the vehicle bears at least one pair (14) of front lateral seats (16), a pair (18) of intermediate lateral seats (20) and a pair (22) of rear lateral seats (24), the seats (16, 20, 24) of each pair (14, 18, 22) being arranged symmetrically on both sides of a longitudinal median axis (A) of the vehicle (10), of the type which comprises at least one console (28) which is slidably mounted on the floor (26) along the longitudinal median axis (A) of the vehicle and of the type in which the console (28) defines at least one compartment (30) for storing a table (32) which is mobile between a folded-up position in which at least one panel (34) of the table (32), folded up into the compartment (30), generally extends in a vertical longitudinal plane (V) and a deployed position in which said panel (34) generally extends in a horizontal plane (H) outside the compartment (30), **characterised in that** the console (28) is capable of occupying at least one position in which the deployed table (32) is arranged longitudinally between the pair (14) of front lateral seats (16) and the pair (18) of intermediate lateral seats (20) and at least one position in which the deployed table (32) is arranged longitudinally between the pair (18) of intermediate lateral seats (20) and the pair (22) of rear lateral seats (24),
and **in that** it comprises at least one central seat (48) which is mobile on the floor along the longitudinal median axis (A) of the vehicle between at least one position in which the central seat (48) is arranged between the intermediate lateral seats (20) and at least one position in which the central seat (48) is arranged between the rear lateral seats (24),
to determine at least one configuration of the passenger compartment (11) in which the deployed table (32) is used for the intermediate lateral seats (20) and the central seat (48) which are aligned transversely and at least one configuration of the passenger compartment (11) in which the deployed table (32) is used for the rear lateral seats (24) and the central seat (48) which are aligned transversely.

2. Arrangement (12) according to the preceding claim, **characterised in that** the central seat (48) is slidably mounted along the median axis (A) of the vehicle (10).

3. Arrangement (12) according to one of the preceding claims, **characterised in that** the front lateral seats (16) are capable of being rotated towards the rear (50) of the vehicle (10) to determine at least one configuration of the passenger compartment (11) in which the deployed table (32) is used for the front lateral seats (16) opposite the intermediate lateral seats (20) and at least one configuration of the passenger compartment (11) in which the deployed table (32) is used for the front lateral seats (16) opposite the intermediate lateral seats (20) and the central seat (48).

4. Arrangement (12) according to the preceding claim, **characterised in that** the front lateral seats (16) are each pivotably mounted on a support which may be adjusted longitudinally.

5. Arrangement (12) according to one of the preceding claims, **characterised in that** the intermediate lateral seats (20) are capable of being rotated towards the rear (50) of the vehicle (10) to determine at least one configuration of the passenger compartment (11) in which the deployed table (32) is used for the intermediate lateral seats (20) opposite the rear lateral seats (24) and the central seat (48).

6. Arrangement (12) according to the preceding claim, **characterised in that** the intermediate and rear lateral seats (20, 24) are each slidably mounted on rails (23).

7. Arrangement (12) according to the preceding claim, **characterised in that** each intermediate lateral seat (20) is capable of being removed from its rails (23), rotated, then inserted again into said rails (23) to permit its orientation to the rear (50).

8. Arrangement (12) according to Claim 6, **characterised in that** each intermediate lateral seat (20) is mounted on its rails (23) by means of a support on which it is pivotably mounted to permit its orientation to the rear (50).

9. Arrangement (12) according to Claims 2 to 8, taken in combination, **characterised in that** each door seat (16, 20, 24, 48) comprises a safety belt (52) fixed to said seat (16, 20, 24, 48).

10. Arrangement (12) according to any one of the preceding claims, **characterised in that** the console (28) comprises a housing (36), on both sides of which are arranged two vertical lateral compartments (30) which are opposed transversely, which are each intended to receive, in the folded-up position of the table (32), a panel (34) forming half of the table (32) and **in that** the housing (36) comprises support means which are intended, in the deployed position of the table (32), to maintain each panel (34) in the horizontal position.

11. Arrangement (12) according to the preceding claim, **characterised in that** each panel (34) is rectangular and is slidably mounted vertically in the compartment at least by means of lower pins (38) arranged at the lower ends of each panel (34), which are received in two vertical slides (40) arranged at the vertical longitudinal ends (42) of the compartments (30).

12. Arrangement (12) according to the preceding claim, **characterised in that** the support means comprise two slides (46) which extend horizontally at the longitudinal ends (42) of the housing (36) from the upper ends of the horizontal vertical slides (40) towards the interior of the housing (36) and which are intended to receive the lower guide pins (38) of each panel (34) to permit said panel (34) to be held cantilevered on the housing (36), once a panel (34) has been vertically removed from its compartment (30) and pushed back horizontally.

13. Arrangement (12) according to any one of Claims 10 to 12, **characterised in that** each panel (34) is in one piece and **in that** each compartment (30) has dimensions substantially corresponding to those of the panel (34).

14. Arrangement (12) according to any one of Claims 10 to 12, **characterised in that** each panel (34) is made in two equal parts, articulated to one another substantially in the centre of the panel (34) by a hinge with a longitudinal axis, **in that** each part comprises locking means relative to the other part, **in that** the longitudinal and vertical dimensions of the compartment (30) correspond substantially to those of one part, and **in that** the transverse dimension of the compartment (30) is substantially double that of one of the parts.

## Patentansprüche

1. Anordnung (12) für den Fahrzeuginnenraum (11) eines Kraftfahrzeuges (10), bei dem der Fahrzeugboden (26) des Kraftfahrzeuges mindestens ein Paar (14) seitliche Sitze (16) vorn, ein Paar (18) seitliche Sitze (20) in der Mitte und ein Paar (22) seitliche Sitze (24) hinten aufweist, wobei die Sitze (16, 20, 24) eines jeden Paares (14, 18, 22) symmetrisch zu beiden Seiten einer längsverlaufenden Mittelachse (A) des Kraftfahrzeuges (10) angeordnet sind, und mindestens eine Konsole (28) besitzen, die verschiebbar auf dem Fahrzeugboden (26) entlang der längsverlaufenden Mittelachse (A) des Kraftfahrzeuges (10) angebracht ist, wobei die Konsole (28) mindestens ein Fach (30) für die Unterbringung eines Tisches (32) begrenzt, der zwischen einer eingeschobenen Position, in der sich mindestens eine Platte (34) des Tisches (32), die in das Fach (30) eingeschoben ist, im allgemeinen in einer vertikalen Längsebene (V) erstreckt, und einer ausgeklappten Position, in der die Platte (34) im allgemeinen in einer horizontalen Ebene (H) aus dem Fach (30) heraus verläuft, beweglich ist,
**dadurch gekennzeichnet, dass** die Konsole (28) mindestens eine Position einnehmen kann, in der der ausgeklappte Tisch (32) längs zwischen dem Paar (14) von seitlichen Sitzen (16) vorn und dem Paar (18) von seitlichen Sitzen (20) in der Mitte angeordnet ist, und mindestens eine Position einnehmen kann, in der der ausgeklappte Tisch (32) längs zwischen dem Paar (18) von seitlichen Sitzen (20) in der Mitte und dem Paar (22) von seitlichen Sitzen (24) hinten angeordnet ist,
und dass sie mindestens einen zentralen Sitz (48) besitzt, der auf dem Fahrzeugboden entlang der längsverlaufenden Mittelachse (A) des Kraftfahrzeuges zwischen mindestens einer Position, in der der zentrale Sitz (48) zwischen den seitlichen Sitzen (20) in der Mitte angeordnet ist, und mindestens einer Position, in der der zentrale Sitz (48) zwischen den seitlichen Sitzen (24) hinten angeordnet ist, beweglich ist,
um mindestens eine Konfiguration des Fahrzeuginnenraums (11) festzulegen, in der die seitlichen Sitze (20) in der Mitte und der zentrale Sitz (48), die beide quer ausgerichtet sind, von dem ausgeklappten Tisch (32) bedient werden können, und um mindestens eine Konfiguration des Fahrzeuginnenraumes (11) festzulegen, in der die seitlichen Sitze (24) hinten und der zentrale Sitz (48), die beide quer ausgerichtet sind, von dem ausgeklappten Tisch (32) bedient werden können.

2. Anordnung (12) nach dem vorhergehenden Anspruch, **dadurch gekennzeichnet, dass** der zentrale Sitz (48) verschiebbar entlang der Mittelachse (A) des Kraftfahrzeuges (10) montiert ist.

3. Anordnung (12) nach einem der vorhergehenden Ansprüche, **dadurch gekennzeichnet, dass** die seitlichen Sitze (16) vorn im Fahrzeug (10) nach hinten (50) umgedreht werden können, um mindestens eine Konfiguration des Fahrzeuginnenraumes (11) festzulegen, in der die seitlichen Sitze (16) vorn gegenüber den seitlichen Sitzen (20) in der Mitte von dem ausgeklappten Tisch (32) bedient werden können, und um mindestens eine Konfiguration des Fahrzeuginnenraumes (11) festzulegen, in der die seitlichen Sitze (16) vorn gegenüber den seitlichen Sitzen (20) in der Mitte und dem zentralen Sitz (48) von dem ausgeklappten Tisch (32) bedient werden können.

4. Anordnung (12) nach dem vorhergehenden Anspruch, **dadurch gekennzeichnet, dass** die seitlichen Sitze (16) vorn jeweils drehbar auf einer Halterung montiert sind, die in Längsrichtung verstellbar ist.

5. Anordnung (12) nach einem der vorhergehenden Ansprüche, **dadurch gekennzeichnet, dass** die seitlichen Sitze (20) in der Mitte im Fahrzeug (10) nach hinten (59) umgedreht werden können, um mindestens eine Konfiguration des Fahrzeuginnenraumes (11) festzulegen, in der die seitlichen Sitze (20) in der Mitte gegenüber den seitlichen Sitzen (24) hinten und dem zentralen Sitz (48) von dem ausgeklappten Tisch (32) bedient werden können.

6. Anordnung (12) nach dem vorhergehenden Anspruch, **dadurch gekennzeichnet, dass** die seitlichen Sitze (20, 24) in der Mitte und hinten jeweils verschiebbar auf Schienen (23) montiert sind.

7. Anordnung (12) nach dem vorhergehenden Anspruch, **dadurch gekennzeichnet, dass** jeder seitliche Sitz (20) in der Mitte aus seinen Schienen (23) herausgenommen werden, umgedreht und dann erneut in die Schienen (23) eingesetzt werden kann, so dass er nun nach hinten (50) ausgerichtet ist.

8. Anordnung (12) nach Anspruch 6, **dadurch gekennzeichnet, dass** jeder seitliche Sitz (20) in der Mitte mit Hilfe einer Halterung auf seinen Schienen (23) montiert ist, wobei er an der Halterung drehbar montiert ist, um seine Ausrichtung nach hinten (50) zu erlauben.

9. Anordnung (12) nach den Ansprüchen 2 bis 8 in Kombination, **dadurch gekennzeichnet, dass** jeder Sitz (16, 20, 24, 48) einen Sicherheitsgurt (52) aufweist, der mit dem Sitz (16, 20, 24, 48) verbunden ist.

10. Anordnung (12) nach einem der vorhergehenden Ansprüche, **dadurch gekennzeichnet, dass** die Konsole (28) ein Gehäuse (36) aufweist, an dessen beiden Seiten zwei seitliche, vertikale Fächer (30) angeordnet sind, die quer einander gegenüberliegen, und die jeweils in eingeschobener Position des Tisches (32) eine Platte (34) aufnehmen, die die Hälfte des Tisches (32) bildet, und dass das Gehäuse (36) Halteelemente besitzt, die jede Platte (34) bei ausgeklappter Position des Tisches (32) in horizontaler Position halten.

11. Anordnung (12) nach dem vorhergehenden Anspruch, **dadurch gekennzeichnet, dass** jede Platte (34) rechteckig ist, und vertikal verschiebbar mindestens mit Hilfe von unteren Stiften (38) in dem Fach montiert ist, wobei die Stifte an den unteren Enden jeder Platte (34) angeordnet sind, und welche in zwei vertikalen Führungsschienen (40) aufgenommen werden, die an den längsverlaufenden, vertikalen Enden (42) der Fächer (30) angeordnet sind.

12. Anordnung (12) nach dem vorhergehenden Anspruch, **dadurch gekennzeichnet, dass** die Halteelemente zwei Führungsschienen (46) aufweisen, die sich horizontal bis zu längsverlaufenden Enden (42) des Gehäuses (36) erstrecken, und zwar ausgehend von oberen Enden der vertikalen, horizontalen Führungsschienen (40) in Richtung Gehäuseinneres (36), und die die unteren Führungsstifte (38) jeder Platte (34) aufnehmen, damit die Platte (34) im Überhang über das Gehäuse (36) gehalten werden kann, sobald sie vertikal aus ihrem Fach (30) herausgezogen und horizontal umgeklappt worden ist.

13. Anordnung (12) nach einem der Ansprüche 10 bis 12, **dadurch gekennzeichnet, dass** jede Platte (34) aus einem Stück besteht, und dass die Abmessungen eines jeden Faches (30) im wesentlichen den Abmessungen der Platte (34) entsprechen.

14. Anordnung (12) nach einem der Ansprüche 10 bis 12, **dadurch gekennzeichnet, dass** jede Platte (34) aus zwei gleichen Teilen hergestellt ist, die im wesentlichen in der Mitte der Platte (34) durch ein Scharnier mit längsverlaufendem Achsbolzen gelenkig zueinander angebracht sind, und dass jeder Teil Verriegelungseinrichtungen gegenüber dem anderen Teil besitzt, dass die Längsabmessungen und die vertikalen Abmessungen des Faches (30) im wesentlichen denen eines Teils entsprechen, und dass die Querabmessung des Faches (30) im wesentlichen die doppelte Abmessung einer der Teile ist.
